# DEMANDE DE BREVET EUROPEEN

(11) **EP 1 380 845 A1**
(43) Date de publication de la demande: **14.01.2004**
(21) Numéro de dépôt: 02015736.8
(22) Date de dépôt: 13.07.2002
(51) Int. Cl.: G01P 13/00, G01F 1/684, G01F 15/00, G01F 15/18

(54) **Détecteur de courant de gaz ou de liquide pour vannes**

(71) Demandeur: FLUID AUTOMATION SYSTEMS S.A., CH-1290 Versoix (CH)
(72) Inventeur: Janossy, Balazs, 1218 Grand Saconnex (CH); Maier, Michael, 1290 Versoix (CH)
(74) Mandataire: KIRKER & Cie S.A.

(57) **Abrégé**

La présente invention concerne un dispositif de mesure (1) destiné à la détection d'un courant de gaz ou de liquide dans au moins un passage. Le dispositif de mesure (1) comprend une plaque de support (11) comportant au moins un orifice (12) à travers lequel ledit courant de gaz ou de liquide passe. Les orifices (12) sont, soit tous soit une partie d'entre eux, équipés d'un élément thermoélectrique (13) permettant de détecter un courant de gaz ou de liquide. Généralement, le dispositif de mesure (1) est agencé de façon à être placé dans un système pneumatique comportant des vannes (2).

## Description

La présente invention a pour objet un dispositif de mesure destiné à la détection d'un courant de gaz ou de liquide dans au moins un passage.

Dans certaines applications utilisant des vannes et surtout des vannes électromécaniques, par exemple dans les applications médicales, il est nécessaire de connaître avec certitude le débit à travers des passages de la vanne ou au moins de savoir si la vanne est fermée ou ouverte, c'est-à-dire connaître l'état de la vanne. Le problème peut être généralisé dans le sens que la présence ou l'absence voire un changement d'un courant de fluide dans un passage doit être déterminée, par exemple dans un système pouvant comporter une pluralité de passages et notamment de vannes, la mesure de ce courant devant être effectuée à l'aide de moyens adaptés au mieux au système donné.

A cet effet, il existe entre autres des dispositifs qui tentent d'utiliser la différence de la pression due à un changement du courant afin de déterminer s'il y a un courant de fluide dans un passage et ainsi de connaître l'état de la vanne. Ceci présente pourtant des inconvénients, par exemple dans le cas de courants faibles produisant de faibles modifications de la pression ou dans le cas où la pression environnementale n'est pas constante, impliquant des difficultés pour la mesure de la différence de pression et donc pour la détermination de l'état de la vanne.

Le document JP 6 129 568 décrit une vanne électromagnétique équipée d'un détecteur de courant de liquide à base d'un élément thermoélectrique. Ce détecteur est destiné à coopérer avec des moyens de contrôle de la vanne afin de vérifier le fonctionnement de cette dernière. Le détecteur et les moyens de contrôle sont intégrés dans la vanne, ce qui implique une flexibilité réduite pour l'utilisation de la vanne ainsi que du détecteur et un coût de revient élevé pour la production de ces vannes.

Le document WO 0 179 732 expose un dispositif accessoire pour une vanne afin de détecter le bon fonctionnement de la vanne. Ce dispositif vise à détecter le mouvement du noyau mobile au lieu de contrôler la présence d'un courant de liquide dans les passages de la vanne, ce qui présente des inconvénients au niveau de la certitude de la mesure du courant de gaz ou de liquide qui, ici, n'est pas déterminé directement.

En particulier, il n'existe pas de dispositif de mesure qui soit simple et robuste et qui permette la détection facile et sûre d'un courant de fluide dans au moins un passage, notamment un dispositif adapté à servir comme dispositif accessoire et à être facilement intégré dans des systèmes comportant des passages et/ou des vannes afin de déterminer ainsi l'état de la vanne. Il n'existe pas non plus d'assemblage facile d'une vanne ou d'un tel système et d'un tel dispositif accessoire dans leur logement, le cas échéant en remplaçant des pièces déjà existantes comme par exemple des joints entre la vanne et le logement.

Le but de la présente invention est de remédier aux inconvénients précités et l'invention est caractérisée à cet effet par le fait que le dispositif de mesure proposé comprend une plaque de support comportant au moins un orifice à travers lequel ledit courant de gaz ou de liquide passe, au moins un de ces orifices étant équipé d'un élément thermoélectrique permettant de détecter un courant de gaz ou de liquide.

En particulier, le dispositif de mesure est agencé de façon à être placé dans un système comportant des vannes, et comporte un nombre d'orifices adapté au nombre de passages de la (des) vanne(s), de son (leur) logement(s) et/ou du système entier, et peut ainsi être considéré comme dispositif accessoire pour une vanne voire pour des systèmes pneumatiques incorporant des vannes afin de vérifier leur fonctionnement et leur état. Ceci est effectué de façon claire et sûre en mesurant la présence d'un courant de fluide dans le ou les passages à surveiller, donnant ainsi une information directe sur l'état de la vanne.

Le dispositif de mesure voire sa plaque de support a une épaisseur sensiblement égale voire sensiblement inférieure ou égale à un joint conventionnel, ce qui permet d'insérer le dispositif de mesure, de préférence à la place d'un joint conventionnel ou un autre tel composant, par exemple entre une vanne et son logement ou à d'autres emplacements le long des passages à surveiller.

De plus, le dispositif de mesure selon la présente invention peut comprendre comme élément thermoélectrique, par exemple, un pont sur lequel est posée une couche thermoélectrique présentant une certaine résistance électrique en fonction de sa température.

Un circuit électronique correspondant peut être placé directement sur le dispositif de mesure afin de disposer d'un outil complet. Il permet, sur la base des signaux mesurés sur l'élément thermoélectrique, de déterminer la présence d'un courant de gaz ou de liquide dans un ou plusieurs passages de la vanne à proximité de laquelle est situé le dispositif, n'ayant normalement pas la précision nécessaire pour servir de capteur de débit. Il peut cependant également être agencé de manière à ce que le débit de gaz ou de liquide puisse être mesuré.

De ce fait, un dispositif selon la présente invention se distingue par sa construction mécanique simple en utilisant une plaque de support ayant une épaisseur sensiblement inférieure ou égale à un joint conventionnel afin de pouvoir le remplacer, par le fait d'utiliser le principe d'un élément thermoélectrique, et par l'utilisation d'une électronique correspondante afin de vérifier la présence d'un courant de gaz ou de liquide dans les passages de la vanne.

Le dispositif de mesure est donc un moyen simple, robuste, flexible et sûr permettant de vérifier le fonctionnement d'une vanne et/ou de surveiller l'état des passages. Etant donné que le courant de gaz ou de liquide est directement capté indiquant ainsi l'état d'une vanne située à proximité, il est surtout très utile dans le domaine des vannes électromécaniques.

D'autres avantages ressortent des caractéristiques exprimées dans les revendications dépendantes et de la description exposant ci-après l'invention plus en détail à l'aide de dessins.

Les dessins annexés représentent, à titre d'exemple, plusieurs formes d'exécution de l'invention.

Les figures 1a et 1b illustrent schématiquement le principe d'assemblage d'un dispositif de mesure selon la présente invention entre une vanne et un logement correspondant.

Les figures 2a et 2b présentent, à titre d'exemple, des coupes verticale et horizontale d'une forme d'exécution d'un tel dispositif de mesure.

Les figures 3a et 3b illustrent schématiquement deux formes d'exécution d'un circuit électronique adapté au dispositif de mesure.

Les figures 4a à 4d représentent différentes formes d'exécution de l'élément thermoélectrique et de son arrangement sur le dispositif de mesure.

Les figures 5a, 5b et 5c montrent schématiquement différentes formes d'exécution d'un dispositif de mesure destinées à des applications spécifiques.

L'invention va maintenant être décrite en détail en référence aux dessins annexés qui illustrent à titre d'exemple plusieurs formes d'exécution de l'invention.

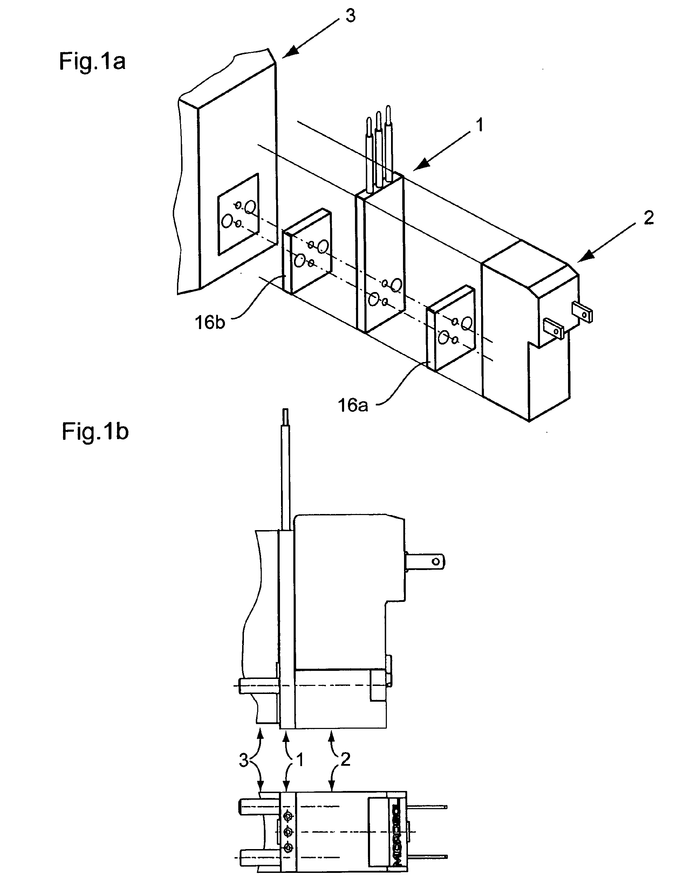

La figure 1a montre schématiquement une vue en perspective d'un ensemble comprenant une forme d'exécution d'un dispositif de mesure 1 selon la présente invention, une vanne 2 ainsi qu'un logement 3 correspondant, ceci étant un exemple simple pour un système pneumatique incorporant des vannes comme mentionné ci-dessus. Le dispositif de mesure 1 destiné à la détection d'un courant de fluide dans un ou plusieurs passages de la vanne 2 est positionné entre la vanne 2 et son logement 3, et présente en général une forme plate de manière à ce qu'il puisse, par exemple, remplacer les joints ou être placé dans l'encombrement de ceux-ci placés conventionnellement entre la vanne 2 et le logement 3. L'épaisseur du dispositif de mesure 1 est, de préférence, comprise entre environ 1 mm et 7 mm, c'est-à-dire de l'ordre de grandeur d'un joint conventionnel, ce qui permet de l'insérer en option dans des systèmes nouveaux ou existants sans ou seulement avec peu de modifications dans leur conception. Normalement, il comprend lui même des joints 16a et 16b, intégrés dans ses surfaces orientées vers la vanne 2 respectivement le logement 3, afin d'assurer l'étanchéité de l'ensemble. Alternativement, les joints peuvent faire part de la vanne et du logement ou peuvent également être disposés individuellement dans des gorges prévues à cet effet dans le dispositif de mesure 1, la vanne 2 et/ou le logement 3.

En référence à la figure 1b, une coupe verticale et une vue du haut de l'ensemble de ces trois éléments sont représentées. Le dispositif de mesure 1 partage le système de fixation avec la vanne, des modifications de cette dernière ne sont donc pas nécessaires. La fixation de ces trois éléments l'un à l'autre peut par exemple être assurée par des vis, comme illustré à la figure 1b, et nécessiter des orifices correspondants dans le dispositif de mesure 1, ou par des clips. Le dispositif de mesure 1 peut aussi être coincé par le système de fixation de la vanne 2 sur le logement 3, ou il peut présenter une forme spécifique adaptée afin d'être fixé par exemple sur la vanne 2; il peut notamment être de forme cylindrique et comporter une section filetée à l'intérieur d'une paroi cylindrique à son pourtour afin d'être vissé sur une vanne cylindrique. En général, le dispositif de mesure 1 présente une forme et une géométrie extérieure adaptées à la vanne 2 et au logement 3 voire au système incorporant les passages ou les vannes sur lequel il est destiné à être placé. De ce fait, le dispositif de mesure 1 est particulièrement adapté à être placé directement sur des connexions standardisées des vannes, comme la norme ISO sous préparation ISO/DIS 15218.

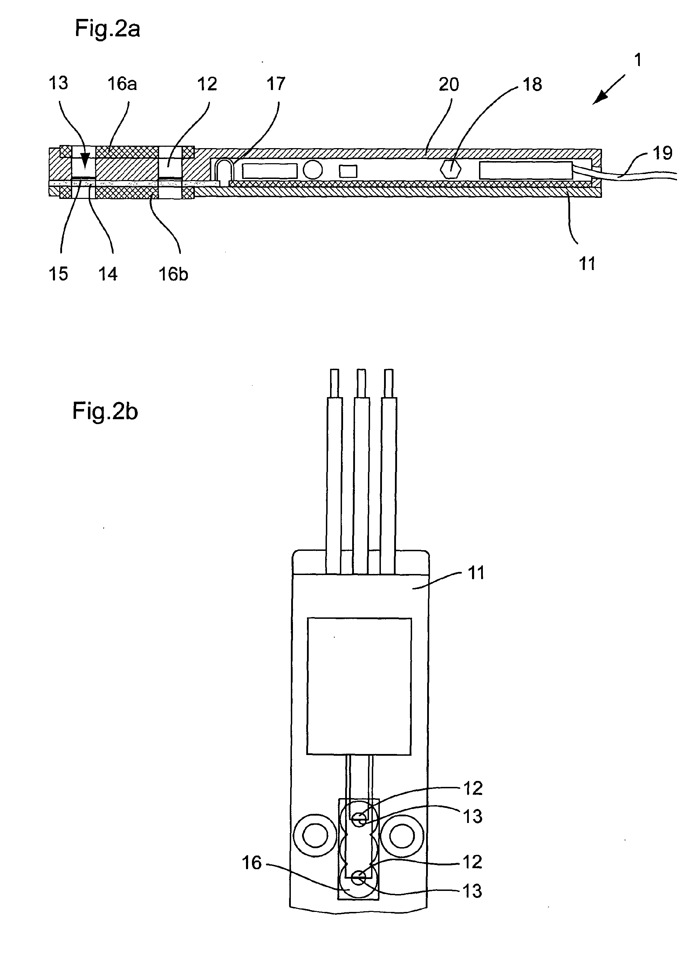

Le dispositif de mesure 1 représenté aux figures 2a et 2b est une forme d'exécution servant ici à titre d'exemple pour la description de la structure détaillée d'un tel dispositif. Il comprend une plaque de support 11 ayant une épaisseur sensiblement inférieure ou égale à un joint conventionnel du type utilisé par exemple entre une vanne 2 et son logement 3. De plus, comme illustré schématiquement à la figure 2b, il comporte un nombre d'orifices 12 adapté au nombre des passages de ladite vanne 2 et de son logement 3, dans le cas représenté deux orifices 12 correspondant à une entrée et une sortie pneumatiques du même côté de la vanne 2. Il pourrait pourtant ne disposer que d'un seul orifice 12 ou en avoir plusieurs, en fonction de la vanne 2 auquel il est destiné. Les orifices 12 sont, soit tous soit une partie d'entre eux, équipés d'un élément thermoélectrique 13 permettant de détecter un courant de gaz ou de liquide. Un circuit électronique 18 est, de préférence, placé directement sur le dispositif de mesure 1 afin de traiter les signaux délivrés par l'élément thermoélectrique 13. Un boîtier 20 peut renfermer ce circuit électronique ou tout le dispositif de mesure 1.

La plaque de support 11 est formée d'un matériau électriquement isolant; de préférence, elle est formée de céramique, d'une plaque de plastique, comme du Kapton, ou d'une plaque de circuit imprimé (printed circuit board/PCB). Ce support 11 forme de préférence un des deux côtés larges du dispositif de mesure 1, comme illustré à la figure 2a.

Les orifices 12 du dispositif de mesure 1 assurent sa fonction d'interface pneumatique entre la vanne 2 et le logement 3 et coopèrent, comme décrit ci-dessus, avec des joints 16a et 16b, qui sont soit intégrés sur le dispositif de mesure 1 soit installés séparément, afin d'assurer l'étanchéité du dispositif voire de l'ensemble des trois éléments. Ces orifices 12 sont placés et agencés de manière à ce que le courant de gaz ou de liquide soit perturbé le moins possible. Ils reprennent notamment la forme géométrique des passages de la vanne 2 ou du système pneumatique correspondant. Comme mentionné ci-dessus et illustré à la figure 2b, le dispositif de mesure peut encore comporter d'autres encoches ou orifices de fixation, par exemple pour recevoir des vis, afin de permettre la fixation du dispositif de mesure 1.

L'élément thermoélectrique 13 comprend un support de capteur 14 et un élément sensible 15 formant le capteur. Le support de capteur 14 peut être formé, comme dans le cas de la figure 2a, d'une petite plaque, par exemple en céramique, comportant des orifices 12 pour les passages et simultanément un pont, de préférence en céramique, traversant chacun des orifices 12 destinés à être équipés d'un élément thermoélectrique 13. Le support de capteur 14 peut également être formé seulement par ce pont fixé dans un orifice 12 du support 11 et définissant seul le support de capteur 14. L'élément sensible 15 du capteur peut être formé par une couche thermoélectrique déposée sur le support de capteur 14 traversant les orifices 12. Elle peut, par exemple, être obtenue en utilisant des pâtes thermosensibles disponibles dans le commerce et apposées, par exemple sur un support de capteur 14 en céramique, en faisant appel à la technologie d'impression par masque ou de sérigraphisme. De même, elle peut être réalisée par une couche fine d'un alliage métallique, comme un alliage en Nickel, ou d'un semi-conducteur en utilisant la technique des composants montés en surface (CMS), version pour laquelle on peut trouver dans le commerce des boîtiers CMS avec une couche thermoélectrique déjà déposée sur un support de capteur 14 et donc prête à l'usage. Dans tous les cas, l'élément sensible 15 du capteur présente une dépendance de sa résistance électrique en fonction de sa température et représente donc la partie sensible de l'élément thermoélectrique 13. De préférence, cette dépendance de la résistance électrique de l'élément sensible de la température est relativement forte, c'est-à-dire un coefficient de température élevé dans le cas d'une dépendance linéaire, et est par exemple de l'ordre d'une variation de la résistance électrique de 0.1 % à 0.4 % par °C, la dépendance pouvant également être non-linéaire. Les parties de l'élément thermoélectrique 13 positionnées dans les orifices 12 et exposées au courant de gaz ou de liquide peuvent être recouvertes d'une couche de protection afin d'éviter des dommages sur l'élément thermoélectrique 13 provoqués par une exposition éventuelle aux substances chimiques. L'élément thermoélectrique 13 est d'une taille faible, de manière à ce que le courant de gaz ou l'écoulement du liquide ne soit pas ou seulement peu perturbé par sa présence dans le passage.

Le principe de détection d'une modification d'un courant de gaz ou de liquide par un tel dispositif de mesure 1 est basé sur le fait que cette modification d'un courant de gaz ou de liquide dans un passage d'une vanne 2 équipé d'un tel dispositif de mesure 1 modifie l'échange de chaleur entre le gaz ou le liquide et l'élément sensible 15. L'élément sensible 15 sur le support de capteur 14 est chauffé de quelques degrés au-dessus de la température ambiante, par exemple en appliquant un courant électrique constant à ses extrémités. La modification d'un courant de gaz ou de liquide a donc pour conséquence une variation de la température de l'élément thermoélectrique 13 et modifie ainsi sa résistance électrique, c'est-à-dire la résistance électrique de la couche thermoélectrique, qui peut ensuite être détectée et utilisée. Le dispositif de mesure 1 selon la présente invention permet en conséquence de détecter une modification prédéterminée d'un courant de gaz ou de liquide et de fournir cette information au moyen d'un signal électrique adéquat à l'utilisateur.

Les connexions électriques 17 de l'élément thermoélectrique 13 passent à travers des joints 16a, 16b assurant l'étanchéité des orifices 12 par rapport au reste du dispositif de mesure 1 et connectent chaque élément thermoélectrique 13 au circuit électronique 18 qui lui-même comprend un connecteur ou un fil 19 servant à sa connexion extérieure. De préférence et comme indiqué dans la figure 2a, ce circuit électronique 18 se trouve dans une partie du dispositif de mesure 1 bien distincte de la partie hébergeant les orifices 12 avec un ou plusieurs éléments thermoélectriques 13, ceci afin de faciliter la conception, l'utilisation et l'étanchéité du dispositif de mesure 1. Au lieu d'être placé sur la plaque de support 11 dans le dispositif de mesure 1 et coopérant, le cas échéant, avec une plaque de support 11 en PCB, comme montré à la figure 2a, le circuit électronique peut aussi être agencé en dehors du dispositif de mesure 1, ce dernier comportant, dans ce cas, seulement les connexions électriques 17 destinées à être connectées à un circuit électronique 18 extérieur. Dans tous les cas, le circuit électronique 18 est adapté à détecter la modification de la résistance électrique d'un élément thermoélectrique 13 due à une modification d'un courant de gaz ou de liquide dans le passage correspondant de la vanne 2. En particulier, le circuit électronique 18, posé dans le cas présent sur la plaque de support 11, comprend des moyens de saisie, de comparaison et d'amplification d'un signal afin de saisir le signal présent sur l'élément thermoélectrique 13, de le comparer à une valeur de référence et d'amplifier la différence entre le signal mesuré et la valeur de référence qui est ensuite transformée en un signal sortant, détectant ainsi la présence ou l'absence ou un changement d'intensité d'un courant de gaz ou de liquide à travers l'orifice 12 dans lequel se trouve l'élément thermoélectrique 13 concerné. Ceci est possible, selon les besoins, soit individuellement pour chaque passage disposant d'un élément thermoélectrique 13 ou de manière combinée pour plusieurs voire tous les passages de la vanne 2 ou du système pneumatique à proximité desquels est disposé le dispositif de mesure.

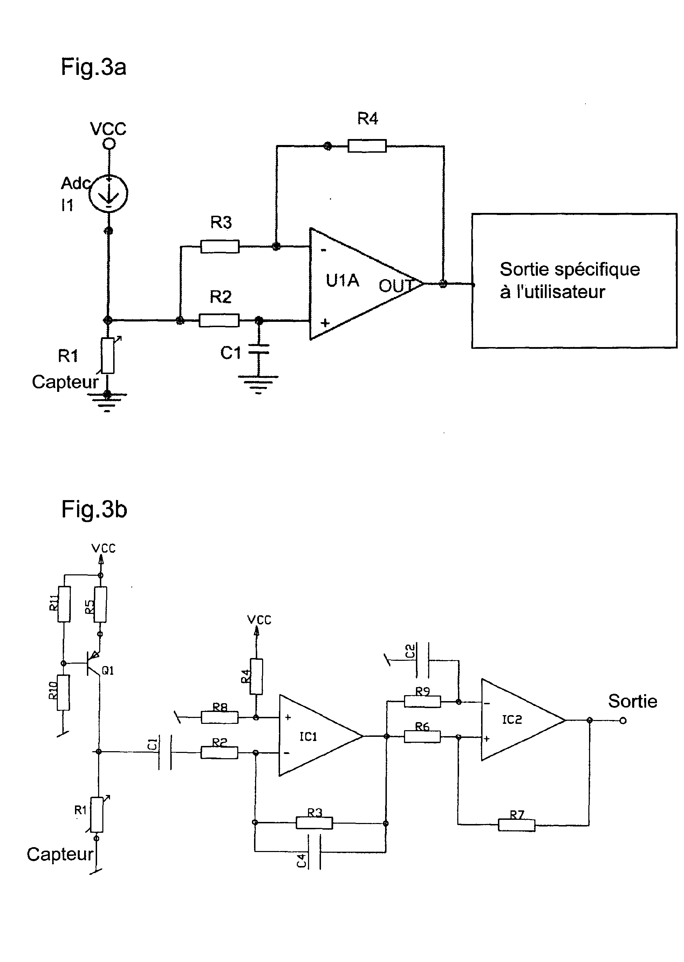

La figure 3a montre une forme d'exécution d'un tel circuit électronique 18. R1 signifie la résistance de l'élément sensible 15 auquel un courant électrique constant est appliqué. Les moyens d'amplification d'un signal mentionnés ci-dessus sont réalisés à l'aide des résistances R3 et R4, qui amplifient la différence entre la tension mesurée à l'élément sensible 15 et la valeur de cette tension intégrée pendant une certaine période de temps. Ce signal intégré, constituant la valeur de référence mentionnée ci-dessus, est obtenu en utilisant la capacité C1 et la résistance R2. L'étape d'amplification détermine la sensibilité du dispositif de mesure 1. La soustraction du signal instantané du signal intégré élimine la plupart des influences environnementales néfastes au signal désiré, comme des fluctuations de la pression ou de la température du gaz ou du liquide. Vu que l'on utilise la différence des tensions mentionnées ci-dessus et du fait que la période de temps d'intégration est plus longue que l'intervalle typique d'une modification du courant de gaz ou de liquide, mais plus courte que l'intervalle typique des fluctuations extérieures comme la variation de la température ou de la pression, une compensation ou un étalonnage par rapport aux paramètres environnementaux n'est pas nécessaire. L'étape de délivrance d'un signal sortant est caractérisée par une grande hystérésis de manière à ce que le signal sortant soit modifié seulement par une modification suffisamment large du signal de l'étape précédente. Le signal sortant est un signal discret et peut être réalisé en délivrant une tension ou par un collecteur ouvert de manière à ce que des spécifications différentes des utilisateurs puissent être facilement prises en compte.

La figure 3b montre une autre forme d'exécution d'un tel circuit électronique 18. De nouveau, le capteur, spécifiquement l'élément sensible 15, est chauffé en appliquant un courant électrique constant, par exemple en utilisant un montage avec un transistor. Le signal du capteur est filtré à l'aide d'un filtre haute fréquence afin de supprimer ses composantes lentes et DC, ce qui sert à répondre aux modifications rapides du courant de gaz ou de liquide sans tenir compte des variations lentes des paramètres environnementaux décrits ci-dessus. Dans le cas présenté ici, le composant AC du signal mesuré sur l'élément sensible 15 est comparé à un signal de référence et les moyens d'amplification, ici réalisés à l'aide des résistances R2 et R3, amplifient la différence de ces signaux. Un signal sortant est généré en utilisant un comparateur afin de disposer d'un signal sortant digital et d'assurer un relèvement continu de l'état du courant de gaz ou de liquide voire de l'état de la vanne.

Le circuit électronique 18 est normalement, mais pas nécessairement, logé dans le boîtier 20 afin de le protéger. Ledit boîtier peut être réalisé dans plusieurs matériaux, de préférence en plastique ou en élastomère. Il peut couvrir seulement la partie du dispositif de mesure 1 accueillant le circuit électronique 18 ou il peut s'étendre plus loin afin de former, en intégrant les joints 16 et les orifices 12, l'ensemble de l'autre des deux côtés larges du dispositif de mesure 1 en face de la plaque de support 11. Il peut même renfermer tout le dispositif de mesure 1. Dans tous les cas de figure, l'ensemble du dispositif de mesure 1 possède une épaisseur sensiblement égale à un joint conventionnel du type utilisé par exemple entre la vanne 2 et son logement 3 afin de pouvoir le remplacer.

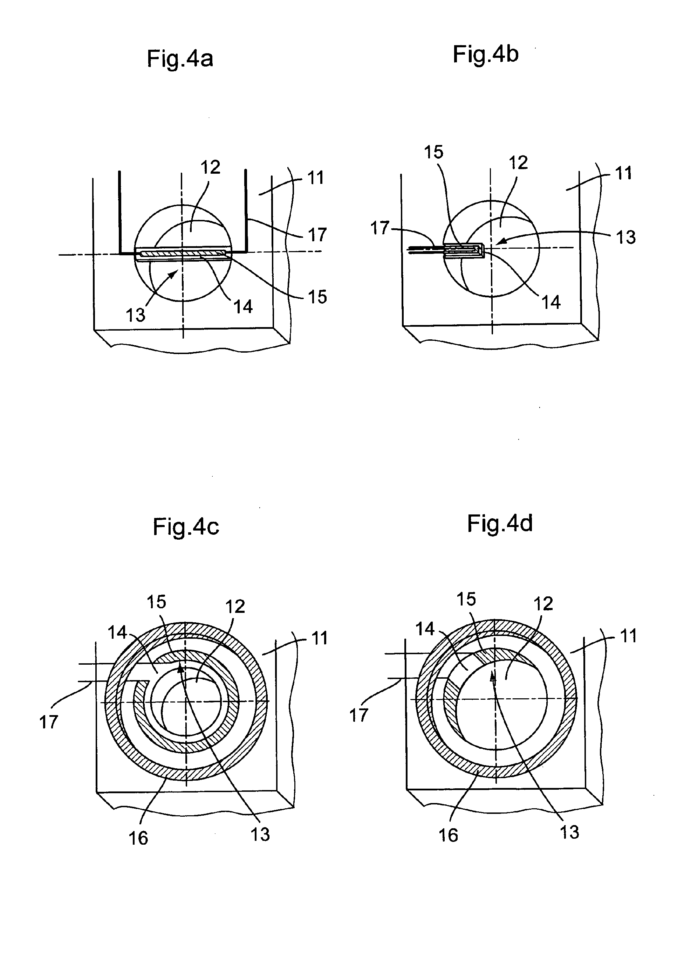

Les figures 4a à 4d illustrent différentes formes d'exécution de l'élément thermoélectrique 13 et de son arrangement sur le dispositif de mesure 1 en présentant des agrandissements schématiques et non à une échelle réelle de cette partie du dispositif de mesure 1. Le cas de la figure 4a est celui d'un élément thermoélectrique 13 traversant l'orifice 12 du dispositif de mesure 1 et donc du passage à surveiller. Comme décrit ci-dessus, un support de capteur 14 traverse l'orifice 12 comme un pont de très faible épaisseur, un élément sensible 15 est placé, sur un ou les deux côtés ou sur toute la surface, sur ce support, et aux extrémités de l'élément sensible 15 débouchent les connexions électriques 17 de l'élément thermoélectrique 13. Par contre, l'élément thermoélectrique de la figure 4b est réalisé d'une manière plongeante dans l'orifice 12. Le support de capteur 14 est introduit dans l'orifice 12 seulement à la périphérie de ce dernier, ce qui permet encore de réduire les effets de la présence du capteur dans le passage sur l'écoulement du fluide. D'autres variations concernant l'arrangement de l'élément thermoélectrique autour de l'orifice 12 sont présentées aux figures 4c et 4d, où le support de capteur 14 entoure l'orifice 12 et est, dans les cas représentés, quasi-circulaire. Dans ce cas, l'élément sensible 15 peut être placé soit à la surface de l'orifice 12 orientée dans la direction de l'axe du passage, comme à la figure 4c, soit à la surface de sa paroi intérieure, comme à la figure 4d. La première disposition nécessite un diamètre de l'orifice 12 inférieur au diamètre du passage à surveiller, la deuxième disposition permet deux diamètres identiques, les joints 16 étant placés de manière adéquate autour de l'élément thermoélectrique 13. L'orifice 12 peut également avoir, par exemple, une forme rectangulaire, ovale, etc., les formes d'exécution mentionnées ci-dessus s'appliquant à ce cas par analogie.

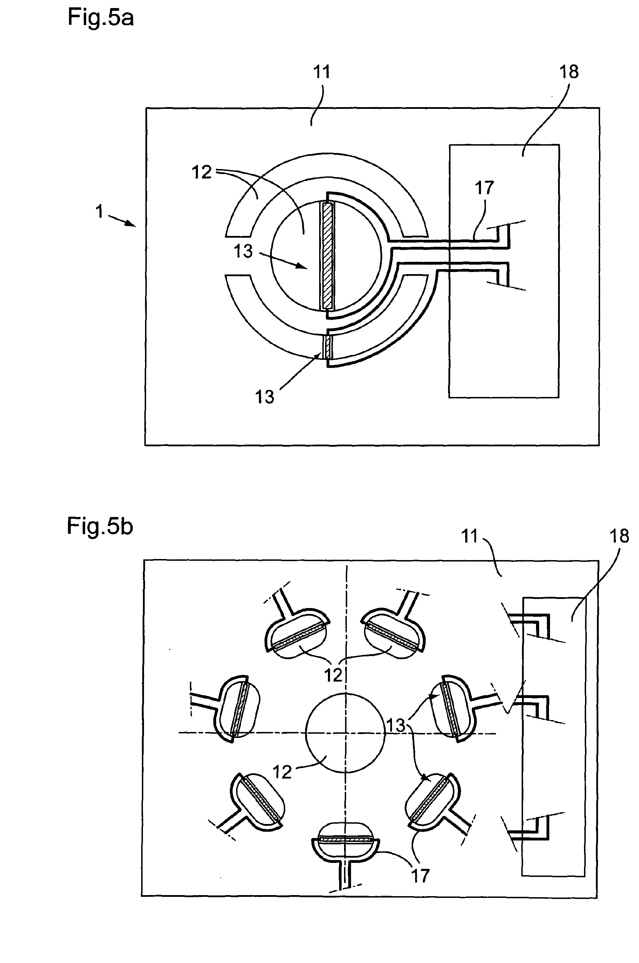

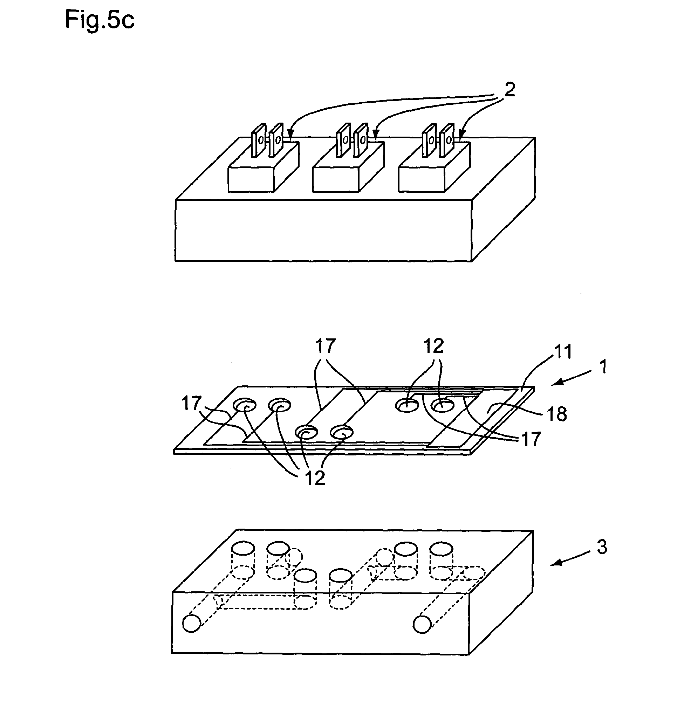

Les figures 5a, 5b et 5c montrent schématiquement différentes formes d'exécution d'un dispositif de mesure 1 destiné à des applications spécifiques. La figure 5a représente un dispositif de mesure 1 avec un raccord concentrique pour les passages de la vanne 2, ce qui est souvent le cas dans les applications sanitaires. Dans le cas représenté, aussi bien l'entrée que la sortie pneumatique sont équipées d'un élément thermoélectrique 13. De nouveau, le circuit électronique 18 peut être placé sur le dispositif de mesure 1. Les joints 16 possèdent une forme adéquate de manière à ce que cette configuration concentrique des orifices 12 soit étanche. La figure 5b illustre schématiquement une configuration d'un dispositif de mesure 1 pour plusieurs vannes comme par exemple pour un système de dosage. Ce dispositif de mesure 1 possède un orifice 12 servant d'entrée et plusieurs orifices 12 servant de sortie, chacun de ces orifices 12 étant équipé d'une vanne 1; le sens du courant de gaz ou de l'écoulement du liquide n'ayant pas d'influence sur le fonctionnement du dispositif de mesure 1, entrée et sortie peuvent, comme toujours, également être inversées. Chaque orifice 12 peut être équipé d'un élément thermoélectrique 13, dont l'information peut être évaluée soit de manière individuelle soit de manière combinée par le circuit électronique 18 correspondant. Finalement, la figure 5c montre un dispositif de mesure 1 destiné à un bloc pneumatique complexe. Plusieurs vannes 2 sont installées sur une embase comportant des passages correspondants. Le dispositif de mesure 1 est placé dans ce cas entre cette embase et le logement 3 de cet embase, ce logement 3 comportant également un système de passages complexe et adapté à l'application désirée. De ce fait, les orifices 12 du dispositif de mesure 1 illustré à la figure 5c sont arrangés de manière à coopérer avec ce système de passages, la flexibilité du dispositif de mesure 1 s'avérant dans ce cas d'une grande utilité. De nouveau, le nombre des orifices équipés d'un élément thermoélectrique 13 peut être choisi en fonction des besoins, de même que la fonctionnalité du circuit électronique 18 disposé sur le dispositif de mesure 1, ce dernier assurant simultanément l'étanchéité de l'ensemble en remplaçant des joints conventionnels. De préférence, les éléments thermoélectriques 13 sont réalisés ici par un élément sensible 15 disposé à la surface autour des orifices 12, comme mentionné lors de la description de la figure 4c. De manière générale, un dispositif de mesure selon la présente invention peut, afin de détecter un courant de gaz ou de liquide dans au moins un passage d'une vanne et donc de surveiller le fonctionnement de cette dernière, être placé à une certaine distance de la vanne ou le long des passages du système pneumatique comprenant des vannes, de façon analogue à ce qui a été décrit ci-dessus. Le dispositif de mesure pourrait par exemple également être placé sur un ou des tuyaux aboutissant aux passages de la vanne, au lieu d'être disposé entre la vanne et son logement, voire une embase et le logement. Comme des tuyaux ou des embases peuvent être considérés comme une source d'erreur négligeable, la mesure d'un courant de gaz ou de liquide à ces endroits permet également la surveillance directe du bon fonctionnement de la vanne, cette disposition ayant parfois des avantages au niveau de l'accessibilité, de la pose, etc. Tout en comportant les mêmes caractéristiques essentielles selon l'invention, la flexibilité dans la conception géométrique et fonctionnelle du dispositif de mesure permet ainsi une grande variété dans ses applications et s'avère très avantageuse.

Des dispositifs de mesure 1 incorporant une combinaison des caractéristiques de plusieurs formes d'exécution décrites ci-dessus peuvent encore être réalisés et suivent l'idée de la présente invention sans impliquer la nécessité de décrire explicitement toutes les variations possibles.

Ainsi, le dispositif de mesure 1 selon la présente invention est un outil simple, robuste, flexible et sûr pour la surveillance des passages, et spécifiquement des vannes, car le courant de gaz ou de liquide est directement capté, indiquant ainsi l'état de la vanne.

## Revendications

1. Dispositif de mesure (1) destiné à la détection d'un courant de gaz ou de liquide dans au moins un passage, **caractérisé par le fait qu'**il comprend une plaque de support (11) comportant au moins un orifice (12) à travers lequel ledit courant de gaz ou de liquide passe, au moins un de ces orifices (12) étant équipé d'un élément thermoélectrique (13) permettant de détecter un courant de gaz ou de liquide.

2. Dispositif de mesure selon la revendication précédente, **caractérisé par le fait qu'**il est agencé de façon à être placé dans un système comportant des vannes (2), et **par le fait qu'**il comporte un nombre d'orifices (12) adapté au nombre de passages de la (des) vanne(s) (2) et/ou de son (leur) logement(s) (3).

3. Dispositif de mesure selon l'une des revendications précédentes, **caractérisé par le fait que** la plaque de support (11) a une épaisseur sensiblement inférieure ou égale à un joint conventionnel.

4. Dispositif de mesure selon l'une des revendications précédentes, **caractérisé par le fait que** l'élément thermoélectrique (13) comprend un support de capteur (14) et un élément sensible (15).

5. Dispositif de mesure selon la revendication précédente, **caractérisé par le fait que** l'élément thermoélectrique (13) comprend comme support de capteur (14) un pont traversant l'orifice (12).

6. Dispositif de mesure selon la revendication 4, **caractérisé par le fait que** l'élément thermoélectrique (13) comprend comme support de capteur (14) un pont plongeant dans l'orifice (12).

7. Dispositif de mesure selon la revendication 4, **caractérisé par le fait que** l'élément thermoélectrique (13) comprend un support de capteur (14) entourant l'orifice (12) sur sa surface orientée dans la direction de l'axe du passage.

8. Dispositif de mesure selon la revendication 4, **caractérisé par le fait que** l'élément thermoélectrique (13) comprend un support de capteur (14) entourant l'orifice (12) sur la surface de sa paroi intérieure.

9. Dispositif de mesure selon l'une des revendications 4 à 8, **caractérisé par le fait que** l'élément sensible (15) comprend une couche thermoélectrique présentant une certaine résistance électrique en fonction de sa température et **par le fait que** la couche thermoélectrique est réalisée par une pâte thermosensible déposée sur le support de capteur (14) en faisant appel à la technologie de sérigraphisme.

10. Dispositif de mesure selon l'une des revendications 4 à 8, **caractérisé par le fait que** l'élément sensible (15) comprend une couche thermoélectrique présentant une certaine résistance électrique en fonction de sa température et **par le fait que** la couche thermoélectrique est réalisée par une couche fine d'un alliage métallique ou d'un semi-conducteur déposée sur le support de capteur (14) en utilisant la technique des composants montés en surface.

11. Dispositif de mesure selon l'une des revendications précédentes, **caractérisé par le fait que** les parties de l'élément thermoélectrique (13) positionnées dans les orifices (12) et exposées au courant de gaz ou de liquide sont recouvertes d'une couche de protection afin d'éviter des dommages sur l'élément thermoélectrique (13).

12. Dispositif de mesure selon l'une des revendications précédentes, **caractérisé par le fait que** la plaque de support (11) est formée d'un matériau électriquement isolant, de préférence de céramique ou d'une plaque de circuit imprimé.

13. Dispositif de mesure selon l'une des revendications précédentes, **caractérisé par le fait qu'**il comprend un circuit électronique (18) adapté à détecter une modification prédéterminée de la résistance électrique de l'élément thermoélectrique (13) de chaque orifice (12) du dispositif de mesure (1) qui en dispose et à délivrer un signal de sortie correspondant, ceci soit individuellement pour chaque orifice (12) du dispositif de mesure (1) équipé d'un élément thermoélectrique (13) ou de manière combinée pour plusieurs voire tous ces orifices (12).

14. Dispositif de mesure selon la revendication précédente, **caractérisé par le fait que** le circuit électronique (18) est disposé sur ladite plaque de support (11) et **par le fait qu'**il comprend des moyens d'amplification d'un signal qui amplifient la différence entre la tension mesurée à l'élément thermoélectrique (13) d'un orifice (12) et la valeur de cette tension intégrée pendant une certaine période de temps, détectant ainsi la présence ou l'absence ou un changement d'intensité d'un courant de gaz ou de liquide dans un passage.

15. Dispositif de mesure selon la revendication 13, **caractérisé par le fait que** le circuit électronique (18) est disposé sur ladite plaque de support (11) et **par le fait qu'**il comprend un filtre haute fréquence afin de supprimer les composantes lentes et DC du signal mesuré à l'élément thermoélectrique (13) d'un orifice (12), **par le fait qu'**il comprend des moyens d'amplification d'un signal qui amplifient la différence entre la composante AC du signal mesuré et un signal de référence, et **par le fait qu'**il comprend un comparateur générant un signal de sortie.

16. Dispositif de mesure selon l'une des revendications 13 à 15, **caractérisé par le fait qu'**il comprend un boîtier (20) qui renferme la partie du dispositif de mesure (1) hébergeant le circuit électronique (18), l'ensemble du dispositif de mesure (1) possédant une épaisseur sensiblement égale à un joint conventionnel.

17. Dispositif de mesure selon la revendication précédente, **caractérisé par le fait que** le boîtier s'étend plus loin afin d'intégrer également les orifices (12) ou tout le dispositif de mesure (1), l'ensemble du dispositif de mesure (1) possédant une épaisseur sensiblement égale à un joint conventionnel.

18. Dispositif de mesure selon l'une des revendications précédentes, **caractérisé par le fait qu'**il partage le système de fixation avec une vanne (2) avec laquelle il coopère.

19. Vanne **caractérisée par le fait qu'**elle comporte un dispositif de mesure (1) selon l'une des revendications précédentes pour détecter un courant de gaz ou de liquide à travers un ou plusieurs de ses passages.
